# EUROPÄISCHE PATENTSCHRIFT

(11) **EP 0 858 363 B1**
(45) Veröffentlichungstag und Bekanntmachung des Hinweises auf die Patenterteilung: **11.08.1999**
(21) Anmeldenummer: 96934636.0
(22) Anmeldetag: 11.10.1996
(51) Int. Cl.: B01D 11/04

(54) **MEHRSTUFIGES EXTRAKTIONSVERFAHREN**
MULTI-STAGE EXTRACTION PROCESS
PROCEDE D'EXTRACTION A ETAGES MULTIPLES

(30) Priorität: 19.10.1995 RU 95117738; 19.10.1995 RU 95117767
(43) Veröffentlichungstag der Anmeldung: 19.08.1998
(73) Patentinhaber: BAYER AG, 51368 Leverkusen (DE)
(72) Erfinder: KOSTANIAN, Artak Eranosovich, Moskovskaya obl., 142701 (RU)
(86) Internationale Anmeldenummer: EP9604423
(87) Internationale Veröffentlichungsnummer: WO9714487

(56) Entgegenhaltungen:
- FR-A- 1 571 433
- US-A- 1 951 787
- US-A- 2 023 109
- US-A- 2 813 011
- US-A- 2 851 396
- US-A- 3 165 384
- US-A- 3 857 919
- US-A- 4 293 387

## Beschreibung

Die Erfindung geht aus von einem Verfahren zur mehrphasigen Extraktion in einem aus einer Vielzahl von hintereinander geschalteten Trennstufen bestehenden Extraktionsapparat, wobei eine Stufe jeweils eine Extraktions- und eine Reextraktionskammer umfaßt und bei dem in der Extraktionskammer eine Abgeberpbase mit einem Extraktionsmittel in Kontakt gebracht wird und in der Reextraktionskammer das Extraktionsmittel im Kontakt mit einer Aufnehmerphase reextrahiert wird.

Extraktionsverfahren dieser Art werden in chemischen, hydrometallurgischen, mikrobiologischen und anderen Industriezweigen zur Trennung, Konzentrierung und Reinigung von Stoffen eingesetzt.

Einstufige Apparate zur Durchführung von Prozessen der dreiphasigen flüssigen Extraktion sind bekannt in Form eines Zweikammersystems, wobei die beiden Kammern im oberen Teil miteinander verbunden sind oder eine poröse Trennwand besitzen. Die Kammern sind mit einer kontinuierlichen Phase gefüllt, durch welche zwei dispergierende Phasen, die nicht löslich in der kontinuierlichen Phase sind, in Form von Tropfen durchgeleitet werden. Hierbei erfolgt der Übergang von Stoffen aus einer dispergierten Phase (Abgeberphase) durch die das Extraktionsmittel bildende kontinuierliche Phase in die andere dispergierte Phase (Aufnehmerphase). Dieses Verfahren wird z.B. in Journal "Theoretische Grundlagen der chemischen Technologie" 1984, T. 18; Nr. 6, S. 736 - 738 beschrieben.

Ferner ist aus der Russischen Patentanmeldung Nr. 94-015776/26 ein dreiphasiger Extraktor bekannt, bei dem eine erste und zweite Kammer mit der kontinuierlichen Phase gefüllt ist. Die Kammern besitzen Vorrichtungen für die Dispergierung der Abgeber- und Aufnehmerphase und sind miteinander durch Überläufe für die Zirkulation der kontinuierlichen Phase verbunden. Die Überläufe sind in Form von Rohren ausgeführt, welche den oberen und unteren Teil der Kammer jeweils miteinander verbinden. Der Extraktor ist mit Stutzen für die Zu- und Abführung der Abgeber- und Aufnehmerphase versehen.

Die Abgeberphase und die Aufnehmerphase werden jeweils in der entsprechenden Kammer mittels einer Dispergiervorrichtung in Tröpfchen zerteilt, die sich als Tropfenschwarm durch die kontinuierliche Phase bewegen. Bei einer entsprechenden Auswahl und Einstellung der Dichtedifferenzen zwischen der Abgeberphase, der Aufnehmerphase und der kontinuierlichen Phase erfolgt allein aufgrund des Dichteunterschiedes der Emulsionen in der ersten und zweiten Kammer eine Zirkulation der kontinuierlichen Phase durch die oberen und unteren Überläufe, so daß ein Übergang des zu extrahierenden Stoffes aus einer Kammer in die andere und damit von der dispersen Abgeberphase in die disperse Aufnehmerphase stattfindet, wobei die kontinuierliche Phase als Transportmittel (carrier) fungiert.

Es ist auch bekannt, zur Erhöhung des Trenneffektes bei dem vorbeschriebenen Extraktionsapparat mehrere Trennstufen direkt hinzereinander zu schalten. Grundsätzlich stehen verschiedene Möglichkeiten offen, die einzelnen Phasen durch die Trennstufen zu führen und die Trennstufen miteinander zu verschalten.

Der Erfindung liegt die Aufgabe zugrunde, die Effektivität eines mehrstufigen Extraktionsverfahrens durch eine optimale Phasenführung und Kopplung der Trennstufen zu verbessern. Dabei steht insbesondere die wirtschaftliche und effiziente Trennung von Stoffsystemen im Vordergrund, bei denen die Verteilung des zu extrahierenden Stoffes zwischen den einzelnen Phasen sehr gering ist. Solche Trennaufgaben könnten bei den konventionellen mehrstufigen Extraktionsverfahren nur mit Hilfe einer sehr großen Zahl von Trennstufen gelöst werden, so daß das Verfahren unwirtschaftlich wird.

Diese Aufgabe wird, ausgehend von dem eingangs beschriebenen Verfahren, erfindungsgemäß dadurch gelöst, daß man das Extraktionsmittel im Kreuzstrom mit der Aufnehmer- und Abgeberphase jeweils innerhalb derselben Trennstufe führt, während die Abgeber- und Aufnehmerphase durch mehrere oder alle Trennstufen im Gegenstrom geführt werden.

Dabei kann man das Extraktionsmittel im Kreuzstrom mit der Aufnehmer- und Abgeberphase jeweils innerhalb derselben Stufe zirkulieren lassen. Alternativ kann aber auch das Extraktionsmittel im Gegenstrom zur Abgeberphase und im Gleichstrom zur Aufnehmerphase oder umgekehrt im Gleichstrom zur Abgeberphase und im Gegenstrom zur Aufnehmerphase durch alle Stufen geführt werden.

Das erfindungsgemäße Verfahren wird vorzugsweise so durchgeführt, daß innerhalb einer Stufe die Abgeberphase in einer Dispergierzone der Extraktionskammer und die Aufnehmerphase in einer Dispergierzone der Reextraktionskammer in dem die kontinuierliche Phase bildenden Extraktionsmittel dispergiert werden und daß die mit dem extrahierten Stoff angereicherte kontinuierliche flüssige Phase innerhalb derselben Stufe aus der Extraktionskammer der Dispergierzone der Reextraktionskammer und die in der Reextraktionskammer abgereicherte kontinuierliche flüssige Phase der Dispergierzone der Extraktionskammer in derselben oder in der nächsten Kammer zugeführt wird. Diese Fahrweise entspricht bei einem Mixer-Settler System für die Extraktion und Reextraktion dem einstufigen Kreuzstrombetrieb.

Vorteilhaft wird das erfindungsgemäße Verfahren als dreiphasiges Extraktionsverfahren durchgeführt, wobei
a) als Abgeberphase eine Flüssigkeit verwendet wird, deren Dichte oberhalb oder unterhalb der Dichte des Extraktionsmittels liegt und
b) als Aufnehmerphase eine Flüssigkeit verwendet wird, deren Dichte unterhalb der Dichte des Extraktionsmittels liegt, wenn die Dichte der Abgeberphase größer ist als die Dichte des Extraktionsmittels und deren Dichte oberhalb der Dichte des Extraktionsmittels liegt, wenn die Dichte der Abgeberphase kleiner ist als die Dichte des Extraktionsmittels, so daß allein aufgrund der Dichteunterschiede der dispersen Phasen gegenüber der kontinuierlichen Phase eine Zirkulationsströmung der kontinuierlichen Phase zwischen Extraktions- und Reaktionskammer aufrecht erhalten wird.

Es wurde überraschend gefunden, daß bei dem erfindungsgemäßen Verfahren der Trenneffekt und damit die Effektivität im Vergleich zu den bekannten mehrstufigen Extraktionssverfahren als Funktion der Zahl der Trennstufen steiler ansteigt. Dies bedeutet, daß man bei schwierigen Trennproblemen mit ungünstigen Verteilungskoeffizienten im Vergleich zu den konventionellen Extraktionsverfahren mit einer geringeren Apparate-Trennstufenzahl auskommt.

Im folgenden wird die Erfindung an Hand von Ausführungsbeispielen und Zeichnungen näher erläutert. Es zeigen
- Fig. 1: ein Verfahrensschema für ein mehrstufiges Extraktionsverfahren nach dem Stand der Technik
- Fig. 2: ein Verfahrensschema für die Hintereinanderschaltung der Trennstufen mit einer internen Zirkulation des Extraktionsmittels in den Stufen
- Fig. 3: ein Verfahrensschema für die Hintereinanderschaltung der Trennstufen mit einer internen und teilweisen externen Zirkulation des Extraktionsmittels, wobei ein Teilstrom im Gleichstrom mit der Abgeber- und in Gegenstrom mit der Aufnehmerphase geführt wird
- Fig. 4: ein Verfahrensschema für die Hintereinanderschaltung der Trennstufen mit einer totalen externen Zirkulation des Extraktionsmittels, bei dem das Extraktionsmittel im Gegenstrom mit der Abgeberphase und im Gleichstrom mit der Aufgeberphase geführt wird
- Fig. 5: ein Verfahrensschema für die Hintereinanderschaltung der Trennstufen mit einer totalen externen Zirkulation des Extraktionsmittels, bei dem das Extraktionsmittel im Gleichstrom mit der Abgeberphase und im Gegenstrom mit der Aufgeberphase geführt wird
- Fig. 6: die Ausführung einer Trennstufe als Dreiphasen-Extraktor
- Fig. 7-10: Ausführungsbeispiele für die Verschaltung von mehrstufigen Dreiphasenextraktoren

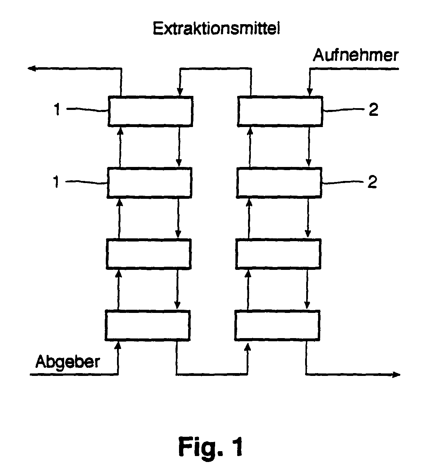

Bei den mehrstufigen Extraktionsapparaturen gemäß Fig. 1 - 5 bestehen die Trennstufen jeweils aus einer Extraktionskammer 1 und einer Reextraktionskammer 2. In den Extraktionskammern 1 wird das Extraktionsmittel mit dem zu extrahierenden Stoff aus der Abgeberphase beladen. In den Reextraktionskammern 2 gibt das Extraktionsmittel den extrahierten Stoff an die Aufnehmerphase ab.

Bei der konventionellen Gegenstromschaltung gemäß Fig. 1 wird das Extraktionsmittel nacheinander von oben nach unten im Gegenstrom zur Abgeberphase durch die Extraktionskammern 1 und danach im Gegenstrom zur Aufnehmerphase von unten nach oben durch die Reextraktionskammern 2 geführt. Die einzelnen Trennstufen sind direkt seriell hintereinander geschaltet und das Extraktionsmittel wird durch einen externen Kreislauf zirkuliert bzw. umgepumpt.

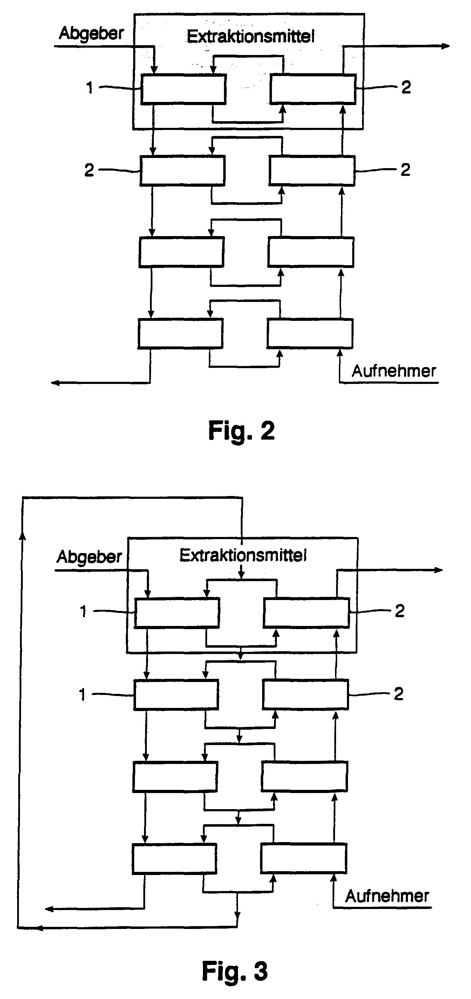

Bei den erfindungsgemäßen Phasenführungen und Verschaltungen von Trennstufen gemäß Fig. 2 und 3 läßt man dagegen jeweils das Extraktionsmittel im Kreuzstrom zur Aufnehmerphase und Abgeberphase derselben Trennstufe zirkulieren, während die Abgeber- und Aufnehmerphase durch alle Stufen im Gegenstrom geführt werden. Das Extraktionsmittel wird somit durch interne Teilkreisläufe ohne oder mit externer Rückführung rezirkuliert.

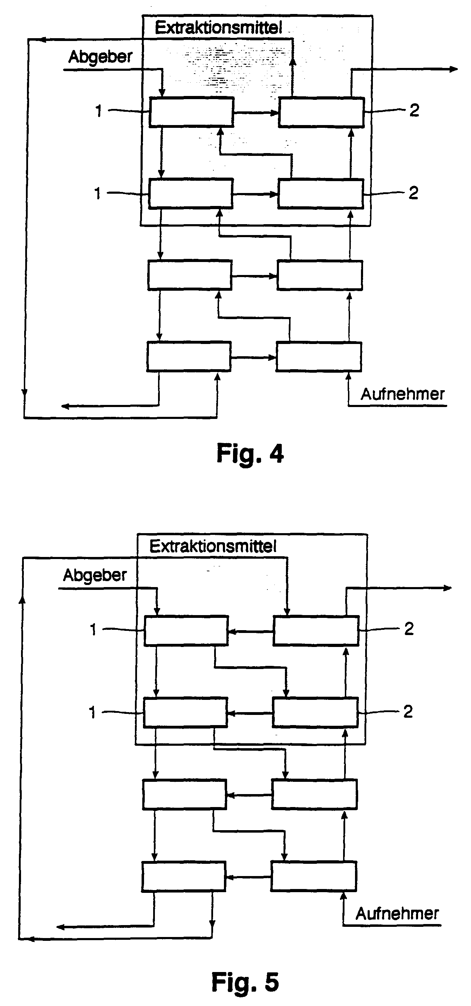

Bei den abgewandelten erfindungsgemäßen Phasenführungen gemäß Fig. 4 und 5 wird das Extraktionsmittel ebenfalls innerhalb derselben Stufe im Kreuzstrom mit der Aufnehmer- und Abgeberphase, aber im Gegenstrom zur Abgeberphase und im Gleichstrom zur Aufnehmerphase (s. Fig. 4) oder umgekehrt im Gleichstrom zur Abgeberphase und im Gegenstrom zur Aufnehmerphase (s. Fig. 5) durch alle Stufen geführt.

Bei beiden Verfahrensführungen werden innerhalb einer Stufe die flüssige Abgeberphase in einer Dispergierzone der Extraktionskammern 1 und die flüssige Aufnehmerphase in einer Dispergierzone der Reextraktionskammern 2 in dem die kontinuierliche flüssige Phase bildenden Extraktionsmittel dispergiert und fein verteilt. Beim Durchströmen der Extraktionskammer reichert sich die kontinuierliche Phase mit dem zu extrahierenden Stoff aus der dispersen Abgeberphase an. Die angereicherte kontinuierliche flüssige Phase wird dann innerhalb derselben Trennstufe in die Dispergierzone der Reextraktionskammer 2 überführt. Dort erfolgt im Kontakt mit der dispersen Aufnehmerphase eine Abreicherung der kontinuierlichen Phase und dementsprechend eine Anreicherung der Aufnehmerphase mit dem extrahierten Stoff. Die abgereicherte kontinuierliche, flüssige Phase wird nun wiederum der Dispergierzone der Extraktionskammer 1 derselben oder der nächsten Trennstufe zugeführt, sodaß in jeder Trennstufe eine innere oder sequentielle Zirkulation der kontinuierlichen Phase stattfindet.

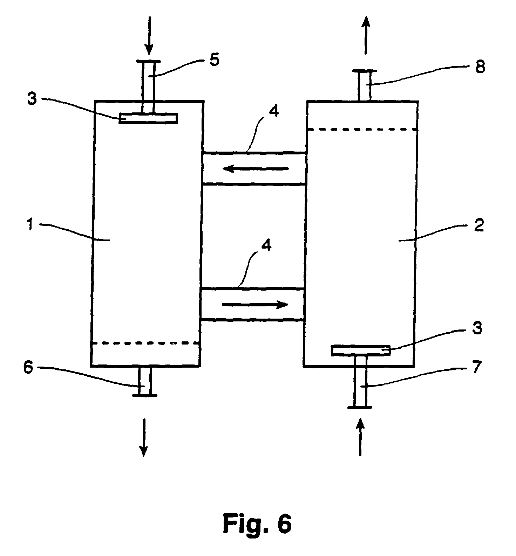

Bei der praktischen Durchführung des erfindungsgemäßen Verfahrens haben sich als Trennstufen Dreiphasenextraktionsstufen gemäß Fig. 6 bewährt. Dabei wird vorteilhaft als Abgeberphase eine Flüssigkeit verwendet, deren Dichte oberhalb oder unterhalb der Dichte des Extraktionsmittels liegt. Als Aufnehmerphase kommt dann eine Flüssigkeit zum Einsatz, deren Dichte unterhalb der Dichte der kontinuierlichen Phase bzw. des Extraktionsmittels liegt, wenn die Dichte der Abgeberphase größer ist als die Dichte der kontinuierlichen Phase und deren Dichte oberhalb der Dichte der flüssigen Phase liegt, wenn die Dichte der Abgeberphase kleiner ist als die Dichte der kontinuierlichen Phase Extraktionsmittels, so daß allein aufgrund der Dichteunterschiede der dispersen Phasen gegenüber der kontinuierlichen Phase eine Zirkulationsströmung der kontinuierlichen Phase zwischen Extraktions- und Reaktionskammer aufrecht erhalten werden kann.

Die Dreiphasenextraktionsstufe besteht grundsätzlich aus der Extraktionskammer 1 und der Reextraktionskammer 2, die beide mit einer Dispergiervorrichtung 3 versehen sind. In ihrem oberen und unteren Teil sind die Kammern 1 und 2 durch Verbindungskanäle bzw. Überläufe 4 verbunden. Abhängig von der Dichte der dispersen Phasen muß die Trennstufe so betrieben werden, daß die Phasengrenzen der kontaktierten Phasen oberhalb oder unterhalb der Verbindungen zwischen den Kammern 1 und 2 liegen. Die Dreiphasenextraktionsstufe mit den Stutzen 5 und 6 für die Zuführung und Abführung der Abgeberphase und den Stutzen 7 und 8 für die Zuführung und Abführung der Aufnehmerphase ausgestattet.

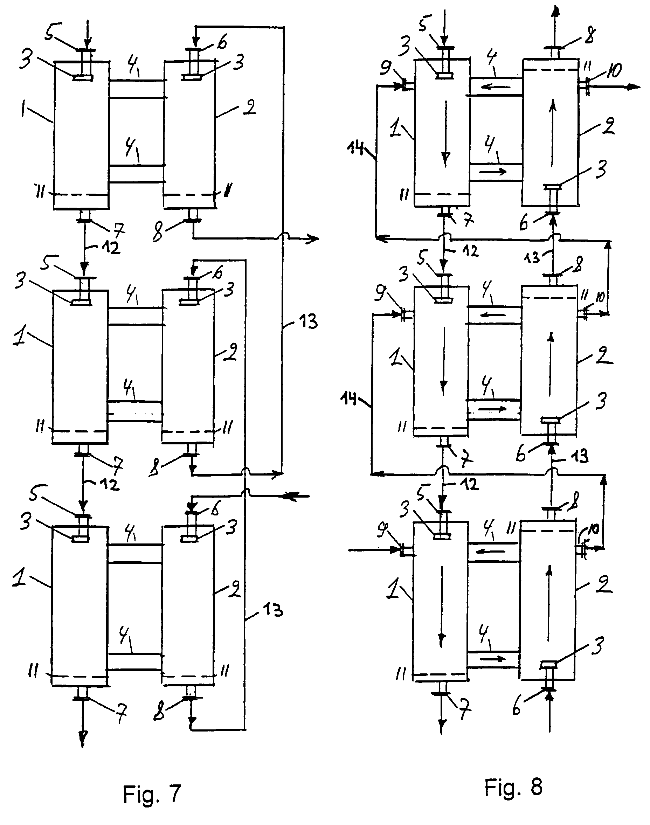

In den Fig. 7 und 8 sind mehrstufige Dreiphasen-Extraktoren dargestellt, bei denen die Kammern 1 und 2 in einem System von Trennstufen hintereinander geschaltet und so miteinander verbunden sind, daß die Strömungszustände gemäß den Verfahrensschemata Fig.2 und 3 realisiert werden können. Die Kammern 1 und 2 sind wiederum beide mit einer Dispergiervorrichtung 3 versehen. In ihrem oberen und unteren Teil sind die Kammern 1 und 2 durch Verbindungskanäle bzw. Überläufe 4 verbunden. Abhängig von der Dichte und/oder den Anteilen der dispersen Phasen muß die Phasengrenze der kontaktierten Phasen oberhalb oder unterhalb der Verbindungen 4 zwischen den Kammern 1 und 2 liegen. Die Stufen sind mit den Stutzen 5 und 6 für die Zufuhrung und mit den Stutzen 7 und 8 für die Abführung der dispersen Aufnehmer- und Abgeberphase ausgestattet. Ferner sind bei der Variante nach Fig. 8 ein Stutzen 9 für die Zuführung und ein Stutzen 10 für die Abführung der kontinuierlichen Phase vorgesehen. Die Kammern 1 verschiedener Stufen sind zur Weiterleitung der dispersen Phasen über die Verbindungsleitungen 12 und die Kammern 2 über die Verbindungsleitungen 13 untereinander verbunden. Bei der Ausführung nach Fig. 8 ist zusätzlich noch eine Verbindungsleitung 14 für die Weiterführung der kontinuierlichen Phase zwischen den Stufen vorgesehen.

Die mehrstufigen Dreiphasen-Extraktoren gemäß Fig. 7 und 8 arbeiten nach folgendem Prinzip.

Die Extraktionskammern 1 und Reextraktionskammern 2 werden mit dem Extraktionsmittel als kontinuierliche Phase gefüllt. In die Kammern wird über die Stutzen 5 und 6 und die Dispergiervorrichtungen 3 die Abgeberphase und die Aufnehmerphase eingespeist. In Abhängigkeit der Dichten der zu kontaktierenden Flüssigkeiten bewegen sich die Tröpfchen der dispergierten Phase in den Kammern 1 und 2 nach oben oder unten und koaleszieren an der Phasengrenzfläche 11. Der Vorgang der Dispergierung und Koaleszenz wiederholt sich in jeder Stufe. Die beiden Dispersphasen werden an der ersten und letzten Stufe der Apparatur mittels der Stutzen 8 und 7 abgeführt. Bei der Bewegung der Tropfenschwärme durch die Kammern 1 und 2 bilden sich Dispersionen mit unterschiedlichen Dichten. Infolgedessen entsteht eine aufsteigende und andererseits eine absteigende Bewegung der kontinuierlichen Phase. Daraus resultiert allein aufgrund der Schwerkraft eine Zirkulation der kontinuierlichen Phase zwischen den Kammern 1 und 2. Die kontinuierliche Phase zirkuliert durch die Kammern 1 und 2 sowie die Verbindungskanäle 4 und wird bei der Ausführung nach Fig. 8 zusätzlich über die Verbindungsleitungen 14 von Stufe zu Stufe geleitet.

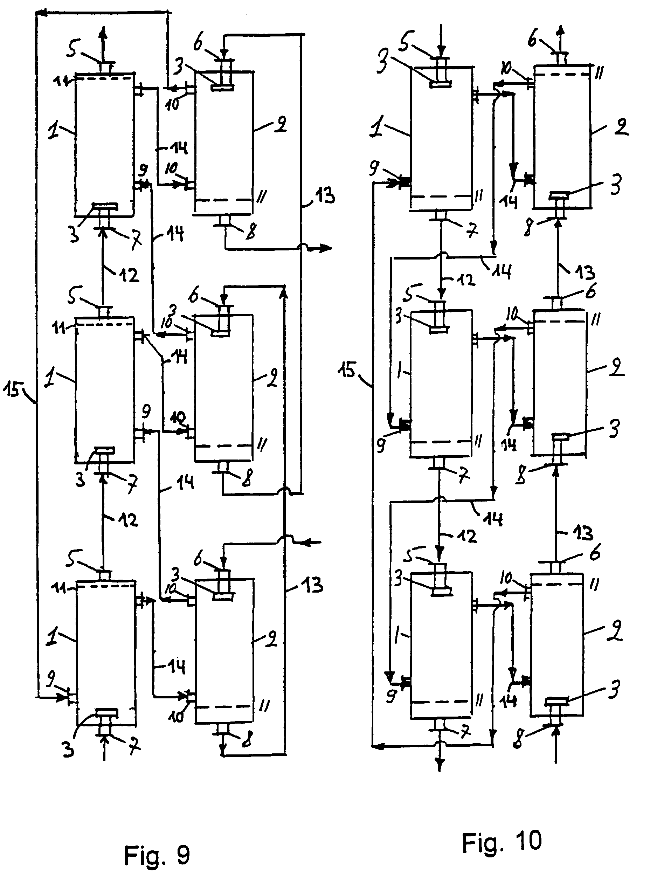

In den Figuren 9 und 10 sind weitere Varianten von mehrstufigen Dreiphasen-Extraktionsapparaten zur Durchführung des erfindungsgemäßen Verfahrens nach den Verfahrensschemata gemäß Fig. 4 und 5 dargestellt.

Der mehrstufige Dreiphasen-Extraktor besteht bei beiden Ausführungen wieder aus Trennstufen mit Extraktionskammern 1 und Reextraktionskammern 2, die mit Dispergiervorrichtungen 3 ausgestattet sind. Die Stufen sind in dem Apparat wieder untereinander angeordnet und miteinander durch die Verbindungsleitungen 12 und 13 für die disperse Abgeber- und Aufnehmerphase und die Verbindungsleitungen 14 für die Weiterführung der kontinuierlichen Phase von Stufe zu Stufe verbunden. Der Extraktor ist wieder mit Stutzen 5 und 6 (nach Fig. 9) bzw. 6 und 7 (nach Fig. 10) und mit Stutzen 7 und 6 (nach Fig. 9) für die Abführung bzw. Stutzen 7 und 6 (nach Fig. 9) und Stutzen 5 und 8 (nach Fig. 10) für die Zuführung der Abgeber- und Aufnehmerphase, sowie mit Stutzen 9 und 10 für die Zu- und Abführung und mit einer Rückführungsleitung 15 für die externe Zirkulation der kontinuierlichen Phase ausgerüstet.

Die mehrstufigen Dreiphasen-Extraktoren gemäß Fig. 9 und 10 arbeiten nach folgendem Prinzip:

Die Kammern 1 und 2 der Stufen werden mit dem Extraktionsmittel als kontinuierliche Phase gefüllt. Die zu dispergierenden Phasen werden den Kammern 1 und 2 der Stufen durch die Stutzen 5 und 6 über die Dispergiervorrichtungen 3 zugeführt. In Abhängigkeit der Dichten der dispergierten Phasen bewegen sich die Tropfenschwämme in den Kammern 1 und 2 nach oben oder nach unten und koaleszieren an der Phasengrenze 11. Die Vorgänge der Dispergierung und der Koaleszenz wiederholen sich in jeder Stufe. Die kontinuierliche Phase fließt durch die Verbindungen 14 nacheinander durch die einzelnen Stufen. Bei der Ausführung nach Fig. 9 wird in der untersten Stufe die Abgeberphase über den Stutzen 7 und die Aufnehmerphase über den Stutzen 6 in der untersten Stufe zugeführt. Die kontinuierliche Phase strömt von unten nach oben von der Kammer 2 der untersten Stufe über Kreuz zur Kammer 1 der darüberliegenden Stufe, dann in die Kammer 2 derselben Stufe und von dort über Kreuz zur Kammer 1 der nächsten darüberliegenden Stufe usw. bis zur obersten Stufe, von der sie durch die Rückführungsleitung 15 in die Kammer 1 der untersten Stufe rezirkuliert wird. Insgesamt ist der Strömungszustand dadurch charakterisiert, daß die kontinuierliche Phase in allen Kammern 1 im Gleichstrom zur dispersen Abgeberphase und durch alle Kammern 2 im Gegenstrom zur dispersen Aufnehmerphase geführt wird.

Bei der Ausführung nach Fig. 10 wird die Abgeberphase über den Stutzen 5 der obersten Stufe und die Aufnehmerphase über den Stutzen 8 der untersten Stufe zugeführt. Die kontinuierliche Phase strömt von oben nach unten und über Kreuz zwischen den Kammern benachbarter Stufen und somit in allen Kammern 1 im Gegenstrom zur Abgeberphase und in allen Kammern 2 im Gleichstrom zur Aufnehmerphase.

Beim Durchströmen der Kammern 1 und 2 kontaktiert die kontinuierliche Phase nacheinander die erste und zweite disperse Phase. Dabei erfolgt der Stoffübergang aus einer dispersen Phase (Abgeberphase) in die andere (Aufnehmerphase) über die kontinuierliche Phase (Extraktionsmittel).

Die dispersen Phasen verlassen den Apparat durch die Stutzen 5 und 8 an der ersten Stufe (Fig. 9) bzw. Stutzen 7 an der letzten und Stutzen 6 an der ersten Stufe (Fig. 10). Die kontinuierliche Phase zirkuliert dagegen durch die Stutzen 9 und 10, die Verbindungen 14 und die den Kreislauf schließende Rückführungsleitung 15 durch den Extraktor.

Die Zirkulationsströmungen können bei entsprechender Wahl der Dichteunterschiede zwischen den einzelnen Phasen und/oder durch Einstellung der Mengenströme der Dispersphasenanteile allein durch die Schwerkraft erzeugt werden. Es steht aber auch nichts im Wege Pumpen für die Kreislaufförderung der kontinuierlichen Phase, z.B. in der Rückführungsleitung 15, einzusetzen.

## Patentansprüche

1. Verfahren zur mehrphasigen Extraktion in einem aus einer Vielzahl von hintereinander geschalteten Stufen bestehenden Extraktionsapparat, wobei eine Stufe jeweils eine Extraktions- und eine Reextraktionskammer umfaßt und bei dem in der Extraktionskammer eine Abgeberphase mit einem Extrakionsmittel in Kontakt gebracht wird und in der Reextraktionskammer das Extraktionsmittel im Kontakt mit einer Aufnehmerphase reextrahiert wird, dadurch gekennzeichnet, daß man das Extraktionsmittel im Kreuzstrom mit der Aufnehmer- und Abgeberphase jeweils innerhalb derselben Stufe führt, während die Abgeber- und Aufnehmerphase durch mehrere oder alle Stufen im Gegenstrom geführt werden.

2. Verfahren nach Anspruch 1, dadurch gekennzeichnet, daß man das Extraktionsmittel im Kreuzstrom mit der Aufnehmer- und Abgeberphase jeweils innerhalb derselben Stufe zirkulieren läßt.

3. Verfahren nach Anspruch 1, dadurch gekennzeichnet, daß man das Extraktionsmittel im Gegenstrom zur Abgeberphase und im Gleichstrom zur Aufnehmerphase durch alle Stufen führt.

4. Verfahren nach Anspruch 1, dadurch gekennzeichnet, daß man das Extraktionsmittel im Gleichstrom zur Abgeberphase und im Gegenstrom zur Aufnehmerphase durch alle Stufen führt.

5. Verfahren nach Anspruch 1 - 4, dadurch gekennzeichnet,
a) daß innerhalb einer Stufe die Abgeberphase in einer Dispergierzone der Extraktionskammer und die Aufnehmerphase in einer Dispergierzone der Reextraktionskammer in dem die kontinuierliche Phase bildenden Extraktionsmittel dispergiert werden
b) und daß die mit dem extrahierten Stoff angereicherte kontinuierliche flüssige Phase innerhalb derselben Stufe aus der Extraktionskammer in die Dispergierzone der Reextraktionskammer und die in der Reextraktionskammer abgereicherte kontinuierliche flüssige Phase der Dispergierzone der Extraktionskammer in derselben oder in der nächsten Stufe zugeführt wird.

6. Verfahren nach Anspruch 5, dadurch gekennzeichnet,
a) daß als Abgeberphase eine Flüssigkeit verwendet wird, deren Dichte oberhalb oder unterhalb der Dichte des Extraktionsmittels liegt
b) und daß als Aufnehmerphase eine Flüssigkeit verwendet wird, deren Dichte unterhalb der Dichte des Extraktionsmittels liegt, wenn die Dichte der Abgeberphase größer ist als die Dichte des Extraktionsmittels und deren Dichte oberhalb der Dichte des Extraktionsmittels liegt, wenn die Dichte der Abgeberphase kleiner ist als die Dichte des Extraktionsmittels, sodaß allein aufgrund der Dichteunterschiede der dispersen Phasen gegenüber der kontinuierlichen Phase eine Zirkulationsströmung der kontinuierlichen Phase zwischen Extraktions- und Reaktionskammer aufrecht erhalten wird.

## Claims

1. Process for the multiphase extraction in an extraction apparatus consisting of a multiplicity of series-connected stages, one stage comprising in each case an extraction chamber and a re-extraction chamber, and in which process, in the extraction chamber, a phase to be stripped is brought into contact with an extraction medium and, in the re-extraction chamber, the extraction medium is re-extracted in contact with a stripping phase, characterized in that the extraction medium is conducted in crossflow with the stripping phase and phase to be stripped in each case within the same stage, while the phase to be stripped and stripping phase are conducted in countercurrent through a plurality of stages or through all stages.

2. Process according to Claim 1, characterized in that the extraction medium is circulated in crossflow with the stripping phase and phase to be stripped in each case within the same stage.

3. Process according to Claim 1, characterized in that the extraction medium is conducted through all stages in countercurrent to the phase to be stripped and in cocurrent to the stripping phase.

4. Process according to Claim 1, characterized in that the extraction medium is conducted through all stages in cocurrent to the phase to be stripped and in countercurrent to the stripping phase.

5. Process according to Claim 1-4, characterized in that
a) within a stage, the phase to be stripped is dispersed in the extraction medium forming the continuous phase in a dispersion zone of the extraction chamber and the stripping phase is dispersed in the extraction medium forming the continuous phase in a dispersion zone of the re-extraction chamber
b) and in that the continuous liquid phase enriched with the extracted substance, within the same stage, is fed from the extraction chamber into the dispersion zone of the re-extraction chamber and the continuous liquid phase which is depleted in the re-extraction chamber is fed to the dispersion zone of the extraction chamber in the same stage or in the next stage.

6. Process according to Claim 5, characterized in that,
a) as phase to be stripped, use is made of a liquid whose density is above or below the density of the extraction medium
b) and in that, as stripping phase, use is made of a liquid whose density is below the density of the extraction medium if the density of the phase to be stripped is higher than the density of the extraction medium and whose density is above the density of the extraction medium when the density of the phase to be stripped is less than the density of the extraction medium, so that solely on account of the density differences between the disperse phases and the continuous phase, a circulatory flow of the continuous phase is maintained between the extraction and re-extraction chambers.

## Revendications

1. Procédé pour l'extraction en plusieurs phases dans un appareil d'extraction constitué de plusieurs étages raccordés les uns derrière les autres, dans lequel un étage comporte chaque fois une chambre d'extraction et une chambre de réextraction, et dans lequel, dans la chambre d'extraction, une phase émettrice est mise en contact avec un agent d'extraction et dans la chambre de réextraction, l'agent d'extraction est réextrait en contact avec une phase réceptrice, caractérisé en ce que l'on conduit chaque fois l'agent d'extraction en courant croisé par rapport à la phase réceptrice et à la phase émettrice à l'intérieur d'un même étage, tandis que la phase émettrice et la phase réceptrice sont conduites à contre-courant à travers plusieurs étages ou tous les étages.

2. Procédé selon la revendication 1, caractérisé en ce qu'à l'intérieur d'un même étage, on fait chaque fois recirculer l'agent d'extraction en courant croisé par rapport à la phase réceptrice et à la phase émettrice.

3. Procédé selon la revendication 1, caractérisé en ce que l'on conduit l'agent d'extraction à travers tous les étages à contre-courant par rapport à la phase émettrice et à co-courant par rapport à la phase réceptrice.

4. Procédé selon la revendication 1, caractérisé en ce l'on conduit l'agent d'extraction à travers tous les étages à co-courant par rapport à la phase émettrice et à contre-courant par rapport à la phase réceptrice.

5. Procédé selon les revendications 1 à 4, caractérisé en ce que
a) à l'intérieur d'un étage, dans une zone de dispersion de la chambre d'extraction, la phase émettrice est dispersée dans l'agent d'extraction formant la phase continue et dans une zone de dispersion de la chambre de réextraction, la phase réceptrice est dispersée dans l'agent d'extraction qui forme la phase continue,
b) et en ce que la phase liquide continue enrichie en la matière extraite est extraite de la chambre d'extraction pour être conduite dans la zone de dispersion de la chambre de réextraction du même étage, et la phase liquide continue appauvrie présente dans la chambre de réextraction est amenée dans la zone de dispersion de la chambre d'extraction du même étage ou de l'étage suivant.

6. Procédé selon la revendication 5, caractérisé en ce que
a) on utilise comme phase émettrice un liquide dont la densité est supérieure ou inférieure à la densité de l'agent d'extraction, et
b) en ce que l'on utilise comme phase réceptrice un liquide dont la densité est inférieure à la densité de l'agent d'extraction lorsque la densité de la phase émettrice est supérieure à la densité de l'agent d'extraction et dont la densité est supérieure à la densité de l'agent d'extraction lorsque la densité de la phase émettrice est inférieure à la densité de l'agent d'extraction, ce qui permet de maintenir un écoulement de recirculation de la phase continue entre la chambre d'extraction et la chambre de réaction uniquement à partir des différences de densité des phases dispersées par rapport à la phase continue.
